# EUROPEAN PATENT APPLICATION

(11) **EP 3 053 881 A1**
(43) Date of publication of application: **10.08.2016**
(21) Application number: 15305163.6
(22) Date of filing: 04.02.2015
(51) Int. Cl.: C01B 33/037

(54) **Silicon purification device**

(71) Applicant: Centre National de la Recherche Scientifique, 75016 Paris (FR); Institut Polytechnique de Grenoble, 38031 Grenoble Cedex (FR)
(72) Inventor: Altenberend, Jochen, 38400 St Martin d'Heres (FR); Bardaine, Anthony, 38000 Grenoble (FR); Chichignoud, Guy, 38100 Grenoble (FR); Delannoy, Yves, 38920 Crolles (FR)
(74) Representative: Goulard, Sophie

(57) **Abstract**

The invention is related to a silicon purification device, characterized in that it comprises:
- means (15,3) for supplying liquid silicon,
- at least one inclined flow plate (5) supplied with the liquid silicon, each flow plate (5) including a path for the liquid silicon flow, the path comprising several changes of direction, and
- means (11,10) for supplying on each flow plate (5) a gas for evacuating silicon impurities counter to the liquid silicon flow.

## Description

The present invention is related to a silicon purification device, in particular for purifying silicon from boron and phosphorus. The invention also relates to a method for purifying silicon from impurities, including boron and/or phosphorus.

The invention is especially suited for fabricating low cost solar cells. Indeed, their manufacture requires high-purity silicon (solar grade silicon). Metallurgical grade silicon that is produced in an electric arc furnace by carbothermic-reduction of silica contains, however, a great quantity of impurities, including boron and phosphorus.

Silicon for solar cells is currently mainly produced by chemical processes, such as a fluidized bed reactor process in combination with a distillation process. However, the production costs are high because of the investment, the energy consumptions and the reprocessing of waste material. For years, work has therefore been done on the production of solar grade silicon by metallurgical processes, with production costs that are expected to be lower as those resulting from chemical processes. In order to produce solar grade silicon with metallurgical processes, directional solidification for removing the majority of the impurities is generally associated with a process for removing boron (purification by plasma, gas blowing refining, slag refining, solvent effect refining) and with a process for removing phosphorous (vacuum evaporation, solvent effect refining).

Among these processes, vacuum evaporation of phosphorous and gas blowing refining for boron are subjected to limiting steps regarding the purification velocity:
- the mass transfer in the liquid phase (convection and diffusion)
- the evaporation (concerning phosphorous) and the chemical reaction (regarding boron) at the surface of silicon
- the mass transfer in the gas (convection and diffusion)

In this field, a considerable amount of work has been focused on reactors that carry out low thickness silicon flows, under reduced pressure and/or under a gas stream. However, these studies lead to expensive processes, which did not allow a commercial exploitation.

Concerning the boron removal, documents US 4,242,175, DE 4128325 and EP 0 304 715 disclose devices in which silicon flows in different types of reactors in contact with a reactive gas flow.

Concerning the phosphorus removal, documents WO 2013/098234 and WO 2013/057450 disclose devices in which silicon flows at a reduced pressure in reactors increasing the silicon surface. The document WO 2008/064378 mentions a silicon flow at a reduced pressure with, in addition, an inert gas flow for evacuating phosphorus vapors and reducing the silicon and heat losses.

These devices suffer the shortcoming that the mass transfer of the impurities from the liquid silicon to the gas is low and that the silicon loss and energy consumption is high.

An object of the invention is to provide a silicon purification device in such a manner to solve the above described problems, in particular to provide a silicon purification device with an optimized geometry for increasing the mass transfer of the impurities from the liquid silicon to the gas, thereby reducing the device volume, the gas consumption, the energy consumption and the silicon losses, which provides a low cost purification.

The object mentioned above is accomplished by a silicon purification device, comprising:
- means for supplying liquid silicon,
- at least one inclined flow plate supplied with the liquid silicon, each flow plate including a path for the liquid silicon flow, the path comprising several changes of direction, and
- means for supplying on each flow plate a gas for evacuating silicon impurities counter to the liquid silicon flow.

In each plate, the path comprises several changes of direction. Thus a negative effect, waves that can be formed on paths parallel to the gas flow, are avoided. These waves would lead to a mixing of the silicon along the path and increase the transport of the impurities from the entry of the reactor to the exit of the reactor and thus reduce the purity of the purified silicon. In the path that is overall perpendicular to the gas flow the friction of the gas has a positive effect because it induces a vortex in the liquid silicon and thus increases the transport of the impurities from the liquid silicon to the gas.

The path is longer and narrower than if the path did not change the direction. As a result, a better homogeneity of the thickness of the silicon flow and an increase of the residence time duration of the silicon in the plate are provided. As a result, a better mass transfer of the impurities from the liquid silicon to the gas is obtained. Thus, the same mass transfer and the same purification speed can be obtained with a smaller device that consumes less gas. As a result, the cost of the device, the energy consumption, the gas consumption and the silicon losses are lower.

The flow plates are typically of elongated shape.

The angle of the flow plates to the horizontal can be comprised of between 0 and 45°, particularly of between 1 and 10°.

The path for the liquid silicon flow comprises preferably at least three changes of direction, and more preferably at least five changes of direction. Preferably, at more than 50% (and preferably 80%) of the path the angle between the path and the gas flow is between 30° and 90°.

The gas can be routed in a gas duct, the height of the gas duct above the silicon path being preferably at least 10 times shorter than the length of the gas duct ion the gas flow direction.

The gas for evaporating silicon impurities can comprise an inert gas such as argon for purifying silicon of phosphorus or a mixture of hydrogen and an oxygenated gas such as water steam for purifying silicon of boron.

The path structure for the liquid silicon flow includes several changes of direction. It can be any kind non rectilinear path, comprising for instance several rectilinear portions with different directions or several non rectilinear portions, such as a meandering, sinuous or sinusoidal path. The path for the liquid silicon flow can in particular include parallel portions, in such a manner that the silicon follows a boustrophedon path, i.e. the silicon flows in one direction in one portion and then in the reverse direction in the next portion of the path. For instance, the silicon can flow in one direction in one line (such as from left to right) and then in the reverse direction in the next line (such as from right to left). The path can also follow a broken line forming alternately inward and outward angles.

The path can be a channel, in particular delimited by vertical walls or barriers.

The length of the liquid silicon flow path can be comprised between 1 and 1000 m, particularly between 50 and 500 m.

The gas flow can be routed along the length the flow plate (longitudinally), whereas the silicon path can include a succession of transversal portions (along the width of the flow plate).

The length of the gas flow path can be comprised between 50 and 5000 mm, particularly between 100 mm and 1000 mm.

In the case of a boustrophedon path, the distance between the right end and the left end of the path can be comprised between 30 and 2000 mm, particularly between 100 and 500 mm.

In a first embodiment, the path for the liquid silicon flow can be delimited by parallel barriers each comprising an opening, the openings being placed alternately at one lateral side of the flow plate and at the opposite lateral side of the flow plate.

In another embodiment, the path for the liquid silicon flow can be delimited by parallel barriers, alternately a barrier comprising a central opening and a barrier comprising two lateral openings, so that the liquid silicon follows a double boustrophedon path.

The distance between the barriers can be comprised between 3 and 100 mm, particularly between 20 and 50 mm. The height of the barriers can be comprised between 0.5 and 20 mm, particularly between 3 and 10 mm.

The silicon purification device can comprise one or several flow plates. The plates can be stacked on and can be parallel or non parallel. The liquid silicon can be supplied in each flow plate inlet and can thus be collected at the outlet of each flow plate. The liquid silicon can also be supplied in an inlet of the upper flow plate and cascade successively from the upper plate to the lower plates of the stacking and be then collected at the outlet of the lowest flow plate.

The area between two superposed flow plates can define a rectangular duct in which the gas flows. The height of the gas flow can be comprised between 1 and 20 mm, and particularly between 3 and 10 mm.

The silicon purification device can thus comprise several flow plates that are stacked on top of each other, each flow plate being supplied with liquid silicon by a silicon distribution system.

The silicon distribution system can include a reservoir with distribution openings, the number of openings being equal to the number of flow plates.

The liquid silicon can be collected in a silicon collection system including a tube with openings located at the level of each flow plate.

The silicon purification device can comprise several flow plates that are stacked on top of each other, the inclination direction of each flow plate being reversed from one flow plate to the flow plate below it, allowing a cascading of the liquid silicon between the successive flow plates. The silicon purification device can thus comprise several groups of such several flow plates that are stacked on top of each other, for instance two symmetric groups that are placed side by side and that define a multi diamond-shape structure. In another embodiment, the silicon purification device can also comprise several groups of parallel flow plates that are stacked on top of each other, the inclination direction of each group being reversed from one group of flow plates to the group of flow plates below it.

The means for supplying liquid silicon can be connected to the upper flow plate and the lower flow plate can be connected to an outlet pipe.

The means for supplying a gas for evaporating silicon impurities can route the gas at the level of the lower flow plate, the gas flowing thereby counter to the silicon and up to a polluted gas collection device via a gas outlet pipe that is placed at the level of the higher flow plate.

The flow plates can be placed in a reactor.

The reactor can be connected to a silicon inlet pipe, a silicon outlet pipe, a gas inlet pipe and a gas outlet pipe.

The silicon purification device can comprise heating means placed around the reactor.

The reactor can be made of a material selected from the group consisting of graphite, SiC, Si₃N₄ and quartz.

The silicon purification device can comprise two reactors, one reactor for purifying silicon of boron and one reactor for purifying silicon of phosphorus.

The invention also relate to a method for purifying silicon of impurities.

The method comprises the steps of:
- providing a liquid silicon flow,
- routing the silicon flow towards at least one inclined flow plate, each flow plate including a path for the liquid silicon flow, the passage comprising several changes of direction, and
- purifying the silicon of impurities by routing on each flow plate a gas for evaporating silicon impurities counter to the liquid silicon flow.

The flow plates can be placed within a reactor and, the gas for evaporating silicon impurities being an inert gas, the temperature inside the reactor can be kept at a value comprised between 1800 and 2500 °C.

The flow plates can be placed with a reactor and, the gas for evaporating silicon impurities being a mixture of hydrogen and water steam, the temperature inside the reactor can be kept at a value comprised between 1410 and 1800 °C.

Other features and advantages of the invention will become apparent from the following description of embodiments and examples of the invention given by way of non-limiting examples only, and with reference to the accompanying drawings, in which:
- Figure 1 is a vertical cross-sectional view of a silicon purification device according to the invention, according to a first embodiment,
- Figure 2 is a vertical cross-sectional view of a silicon purification device according to the invention, according to a second embodiment,
- Figure 3a is a perspective view of a silicon flow plate of the device, according to a first embodiment,
- Figure 3b is a perspective view of a silicon flow plate of the device, according to a second embodiment,
- Figure 3c is a perspective view of a silicon flow plate of the device, according to a third embodiment, and
- Figure 3d is a perspective view of a silicon flow plate of the device, according to a fourth embodiment.

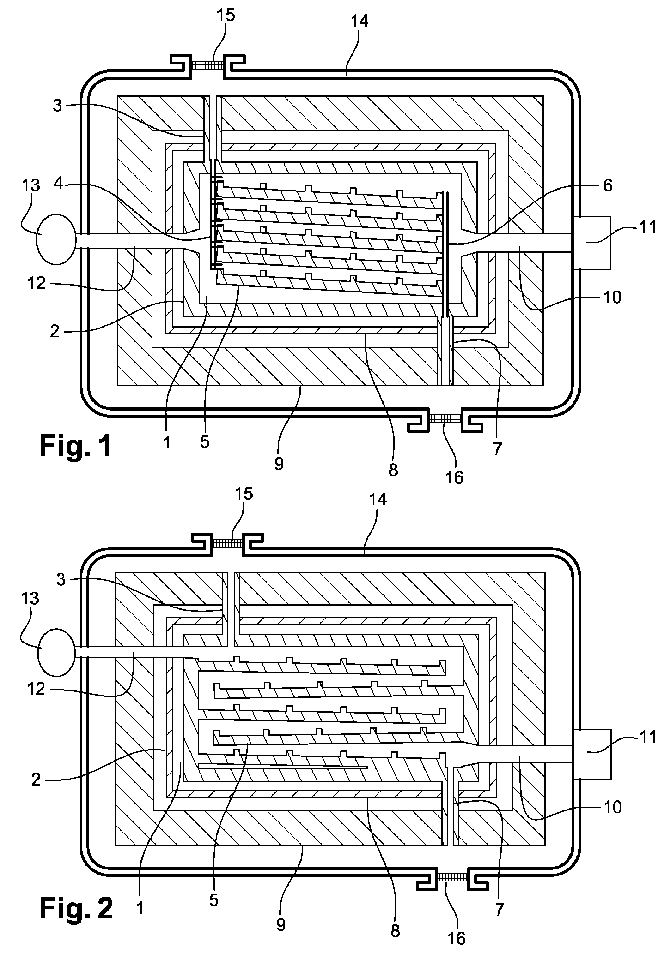

As illustrated in Figure 1, a silicon purification device according to the invention comprises a reactor 1 including one or several silicon flow plates 5 that are surrounded by walls 2. The function of the walls 2 is to keep the gas and silicon flows within the reactor 2.

Silicon is melted in an apparatus, not shown, that is placed outside an outer enclosure 14 of the device. Reactor 1 is supplied with liquid silicon by one or several feed valves 15 and by one or several inlet pipes 3. Silicon is distributed on the flow plates 5 by a distribution system 4. The distribution system 4 can comprise a reservoir the number of openings of which is equal to the number of flow plates 5. The dimensions of each opening are preferably equal in order to ensure the same liquid silicon flow on each flow plate 5.

The flow plates 5 are inclined in order to drain the liquid silicon down to the silicon collection system 6. The collection system 6 may include a tube with openings located at the level of each flow plate 5. Silicon flows in an outlet pipe 7 that is connected to the collection system 6 and then in a recovery system, not shown, through an enclosure outlet valve 16. The purification device can comprise a tilting system of the reactor 1 or of the enclosure 14 for adjusting the inclination of flow plates 5.

Reactor 1 is supplied with gas by a gas supply device 11. Gas is routed towards the reactor 1 via an inlet pipe 10. Gas flows above the flow plates 5 and becomes loaded with silicon impurities. The gas cross sectional area above each flow plate 5 is preferably the same in order to distribute the gas flow identically between the flow plates 5. The geometry of the plates allows a good transfer of the impurities from the liquid phase into the gas phase. Polluted gas is drained towards a gas outlet pipe 12 up to a polluted gas collection device 13. The purification device can include a gas treatment system for the gas evacuation or recycling, not shown.

The reactor 1 is surrounded by heating means 8 for keeping the temperature of silicon at the required method temperature. The heating device 8 is surrounded by a thermal insulation 9 for minimizing heat losses. Between the reactor 1 and the heating means 8 a reactor wall 2 confines the atmosphere of the reactor 1.

According to another embodiment, as illustrated in Figure 2, the reactor 1 comprises flow plates 5 that are inclined alternatively into one direction and into the opposite direction inside the reactor 1, defining a vertical sinuous path. The flow plates 5 allow a cascading of the liquid silicon within the reactor 1, between the inlet pipe 3 and the outlet pipe 7. In this embodiment, no distribution system or collection system 6 is needed. Gas is introduced into the reactor 1 through a gas inlet pipe 10 placed at the lower flow plate level. The gas flows inside the reactor 1 from the containment path of a lower flow plate 5 towards the containment path of a higher flow plate 5. The gas flows counter to the silicon and up to the polluted gas collection device 13 via the gas outlet pipe 12 that is placed at the level of the higher flow plate 5.

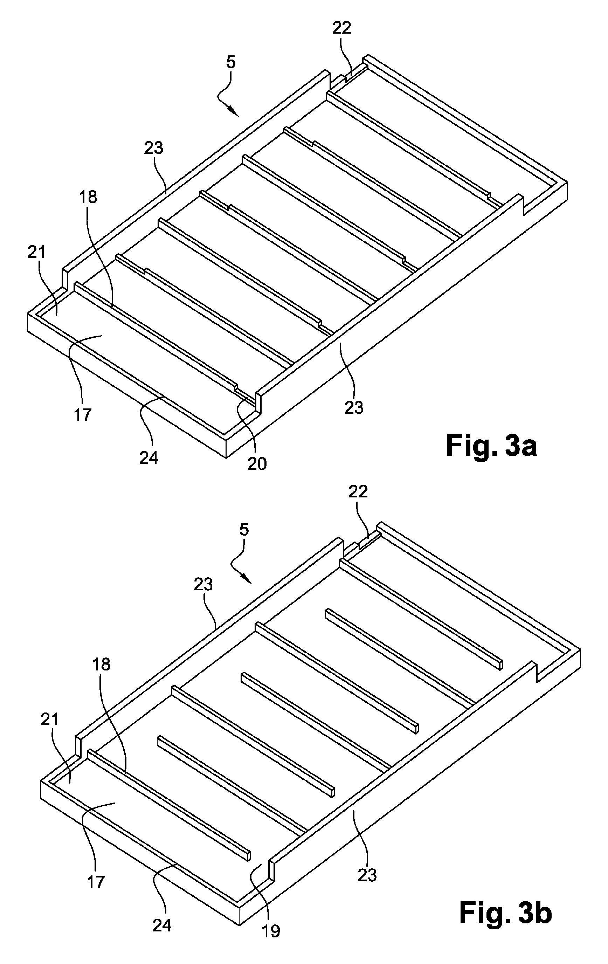

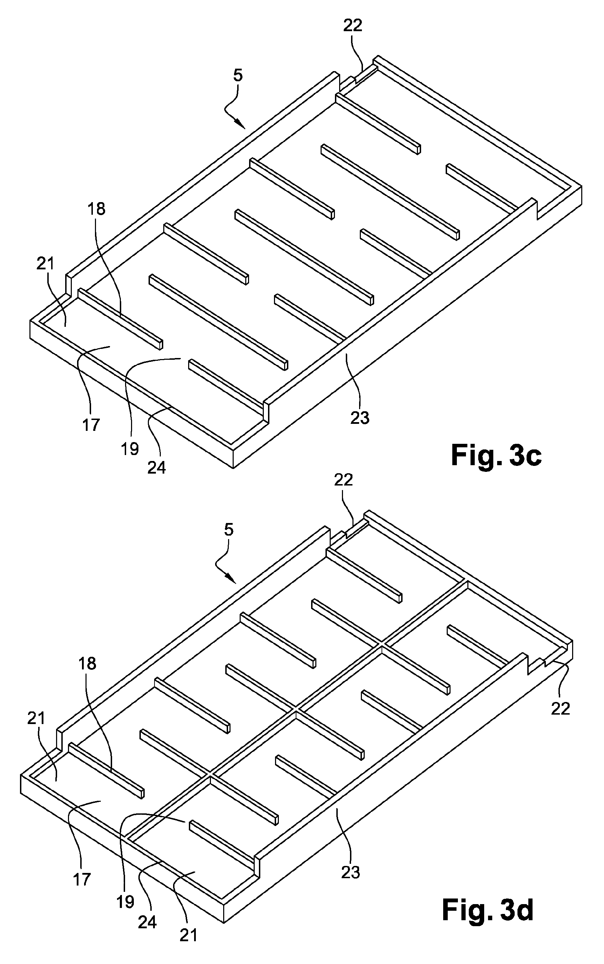

Figures 3a, 3b, 3c and 3d show different embodiments of flow plates 5 that can be used in the purification reactor 1.

According to a first embodiment, as illustrated in Figure 3a, parallel barriers 18 define parallel channels 21 in which the liquid silicon flows. Each barrier 18 includes at one end a notch (opening) 20. The notches 20 are positioned in such a way that silicon follows a zig-zag or boustrophedon path. "Boustrophedon" is taken from the Greek language. Its etymology is from "bous" ("ox") and "strephein" ("to turn"), because the hand of the writer goes back and forth like an ox drawing a plough across a field and turning at the end of each row to return in the opposite direction (i.e., "as the ox ploughs"). Thus, the notches 20 are placed alternatively at one lateral side of the flow plate 5 and at the opposite lateral side. The barriers 18 allow the liquid silicon to be stabilized on a great area and to prevent events such as dewetting or waves. The silicon distribution system 4 adds the liquid on the end of the channel 21 which is at the opposite end of the first notch 20. The barrier 24 placed around the plate 5 prevents the silicon from flowing outside the plate 5. A notch 22 placed at one side of the barrier 24 allows the silicon to flow from the plate 5 to the collection system 6. The flow plate 5 includes a lateral elevated border 23 for placing another flow plate on the flow plate 5. Thus, the area between two superposed flow plates 5 defines a rectangular duct in which the gas flows. The gas applies a friction force to the liquid which induces a vortex in the flow of the liquid silicon. The vortex favors the transport of impurities towards the surface. The surface of these brackets can be inclined so as to create a tilt between two successive inclined flow plates 5 and to change the flow direction, as illustrated on Figure 2.

Figure 3b shows another embodiment of a flow plate 5. Contrary to the first embodiment illustrated on Figure 3b, the barriers 9 do not extend over the full width of the flow plate 5, thus defining openings placed alternately on the left and right of the plate 5, which causes a boustrophedon path of the silicon.

According to a third embodiment of the flow plate 5, as shown on Figure 3c, the plate 5 alternates a barrier 18 with a central opening and a barrier 18 with two lateral openings placed at each lateral end of the plate 5. Thus, silicon flows through the first central opening 19. The silicon flow is then separated into a left flow and a right flow. The left flow and the right flow are then directed to a central opening of the next barrier via the lateral openings and so on. Thus, the liquid silicon follows a double boustrophedon path.

The fourth embodiment of the flow plate 5, as shown on Figure 3d, is similar to the third embodiment. The flow plate 5 includes, in addition to the lateral barriers 18, a longitudinal barrier 25. The silicon enters the flow plate 5 in two inlet areas 21. Then, the silicon follows two boustrophedon paths 17, on either side of the longitudinal barrier 18. The silicon leaves the flow plate 5 via two notches 22 of the plate 5 and is collected by the silicon collection system 6.

### Example 1

A graphite reactor according to Figure 1 includes plates according to Figure 3a. The reactor is heated at a temperature of about 1500°C with an inert gas flow. A constant liquid silicon flow of 1kg/h is provided to the reactor. The bore concentration of the entering liquid silicon is of 34 ppmw (parts per million weight). The reactor is kept at a temperature of 1500°C. The inert gas flow is replaced by a hydrogen flow of 1 Nm³/h and a water steam flow of 0.03 Nm³/h that are introduced counter to the silicon flow in the purification reactor. The outgoing silicon is recovered in a cooled copper crucible. The process is carried out over a period of 5 hours. The boron concentration of the purified silicon is 0.1 ppmw.

### Example 2

A graphite reactor according to Figure 1 includes plates according to Figure 3a. The reactor is heated at a temperature of about 1900°C with an inert gas flow. The pressure is reduced to 10 mbar. Then a constant liquid silicon flow of 0.1kg/h is provided to the reactor. The phosphorous concentration of the entering liquid silicon is of 32 ppmw. The reactor is kept at a temperature of 1900°C. The inert gas flow is kept at 0.1 Nm³/h. The outgoing silicon is recovered in a cooled copper crucible. The process is carried out over a period of 5 hours. The phosphorous concentration of the purified silicon is 0.1 ppmw.

## Claims

1. A silicon purification device, **characterized in that** it comprises:
- means (15,3) for supplying liquid silicon,
- at least one inclined flow plate (5) supplied with the liquid silicon, each flow plate (5) including a path for the liquid silicon flow, the path comprising several changes of direction, and
- means (11,10) for supplying on each flow plate (5) a gas for evacuating silicon impurities counter to the liquid silicon flow.

2. The silicon purification device according to claim 1, **characterized in that** the path for the liquid silicon flow comprises at least three changes of direction.

3. The silicon purification device according to claim 1 or 2, **characterized in that** the gas for evaporating silicon impurities comprises an inert gas for purifying silicon of phosphorus or a mixture of hydrogen and water steam for purifying silicon of boron.

4. The silicon purification device according to claim 3, **characterized in that** the inert gas is argon.

5. The silicon purification device according to any of claims 1 to 4, **characterized in that** the path for the liquid silicon flow includes parallel portions, in such a manner that the silicon follows a boustrophedon path, i.e. the silicon flows in one direction in one portion and then in the reverse direction in the next portion of the path.

6. The silicon purification device according to claim 5, **characterized in that** the path for the liquid silicon flow is delimited by parallel barriers (81) each comprising an opening (20), the openings (20) being placed alternately at one lateral side of the flow plate (5) and at the opposite lateral side of the flow plate (5).

7. The silicon purification device according to any of claims 1 to 4, **characterized in that** the path for the liquid silicon flow is delimited by parallel barriers (18), alternately a barrier (18) comprising a central opening (19) and a barrier (18) comprising two lateral openings, so that the liquid silicon follows a double boustrophedon path.

8. The silicon purification device according to any of claims 1 to 7, **characterized in that** it comprises several flow plates (5) that are stacked on top of each other, each flow plate (5) being supplied with liquid silicon by a silicon distribution system (4).

9. The silicon purification device according to claim 8, **characterized in that** the silicon distribution system (4) includes a reservoir with distribution openings, the number of openings being equal to the number of flow plates.

10. The silicon purification device according to claim 7 or 8, **characterized in that** the liquid silicon is collected in a silicon collection system (7) including a tube with openings located at the level of each flow plate (5).

11. The silicon purification device according to any of claims 1 to 7, **characterized in that** it comprises several flow plates (5) that are stacked on top of each other, the inclination direction of each flow plate (5) being reversed from one flow plate (5) to the flow plate (5) below it, allowing a cascading of the liquid silicon between the successive flow plates (5).

12. The silicon purification device according to claim 11, **characterized in that** the means (15,3) for supplying liquid silicon are connected to the upper flow plate and that the lower flow plate is connected to an outlet pipe (7).

13. The silicon purification device according to 11 or 12, **characterized in that** the means (11,10) for supplying a gas for evaporating silicon impurities route the gas at the level of the lower flow plate, the gas flowing thereby counter to the silicon and up to a polluted gas collection device via a gas outlet pipe that is placed at the level of the higher flow plate.

14. The silicon purification device according to any of claims 1 to 13, **characterized in that** the flow plates (5) are placed within a reactor (1).

15. The silicon purification device according to claim 14, **characterized in that** it comprises heating means (8) placed around the reactor (1).

16. The silicon purification device according to claim 14 or 15, **characterized in that** the reactor (1) is made of a material selected from the group consisting of graphite, SiC, Si₃N₄ and quartz.

17. The silicon purification device according to any of claims 14 to 16, **characterized in that** it comprises two reactors (1), one reactor for purifying silicon of boron and one reactor for purifying silicon of phosphorus.

18. A method for purifying silicon of impurities, characterized it comprises the steps of:
- providing a liquid silicon flow,
- routing the silicon flow towards at least one inclined flow plate (5), each flow plate (5) including a path for the liquid silicon flow, the path comprising several changes of direction, and
- purifying the silicon of impurities by routing on each flow plate (5) a gas for evacuating silicon impurities counter to the liquid silicon flow.

19. The method according to claim 18, **characterized in that** the flow plates (5) are placed within a reactor (1), and **in that**, the gas for evaporating silicon impurities being an inert gas, the temperature inside the reactor is kept at a value comprised between 1800 and 2500 °C.

20. The method according to claim 18, **characterized in that** the flow plates are placed within a reactor (1), and **in that**, the gas for evaporating silicon impurities being a mixture of hydrogen and water steam, the temperature inside the reactor is kept at a value comprised between 1410 and 1800 °C.
